# EUROPÄISCHE PATENTSCHRIFT

(11) **EP 1 490 586 B1**
(45) Veröffentlichungstag und Bekanntmachung des Hinweises auf die Patenterteilung: **20.12.2006**
(21) Anmeldenummer: 02794987.4
(22) Anmeldetag: 11.12.2002
(51) Int. Cl.: F01N 3/031, F01N 3/023

(54) **RUSSFILTER UND VERFAHREN ZUR REINIGUNG VON ABGASEN**
PARTICLE FILTER AND METHOD FOR PURIFYING EXHAUST GASES
FILTRE A PARTICULES ET PROCEDE POUR NETTOYER DES GAZ D'ECHAPPEMENT

(30) Priorität: 19.02.2002 DE 10206805
(43) Veröffentlichungstag der Anmeldung: 29.12.2004
(73) Patentinhaber: ROBERT BOSCH GMBH, 70442 Stuttgart (DE)
(72) Erfinder: BREUER, Norbert, 71254 Ditzingen (DE); SCHUMANN, Bernd, 71277 Rutesheim (DE); FISCHER, Stefan, 96215 Lichtenfels (DE)
(86) Internationale Anmeldenummer: PCT/DE2002/004538
(87) Internationale Veröffentlichungsnummer: WO 2003/071107

(56) Entgegenhaltungen:
- EP-A- 0 230 140
- WO-A-00/35563
- DE-A- 10 000 921
- PATENT ABSTRACTS OF JAPAN vol. 009, no. 162 (M-394), 6. Juli 1985 (1985-07-06) & JP 60 036709 A (TSUCHIYA SEISAKUSHO:KK), 25. Februar 1985 (1985-02-25)

## Beschreibung

### Stand der Technik

Die vorliegende Erfindung betrifft einen Rußfilter zur Reinigung von Abgasen einer Verbrennungsanlage, insbesondere eines Motors eines Kraftfahrzeuges, nach dem Oberbegriff des Patentanspruchs 1.

Bei der Verbrennung von Kraftstoffen in Verbrennungsanlagen, insbesondere Motoren wie beispielsweise Dieselmotoren, können Rußpartikel entstehen. Zur Reduzierung der Partikelemissionen im Abgas werden Filter eingesetzt, durch die das Abgas hindurchströmt, und in denen entstandene Partikel zurückgehalten werden. Durch die mit dem Betrieb zunehmende Partikelmasse im Filterkörper steigt der Abgasgegendruck im Filterkörper jedoch kontinuierlich an. Es ist daher notwendig, den Filter nach einer gewissen Zeit zu regenerieren, das heißt die abgelagerten Rußpartikel zu entfernen. Dies kann beispielsweise durch Oxidation des Rußes bewerkstelligt werden. Hierzu ist ein geeignetes Oxidationsmittel, in der Regel Sauerstoff, sowie die Erzeugung einer erforderlichen Zündtemperatur notwendig. Nach Zündung des Rußes läuft die Verbrennung bei definierter Auslegung der Filtereinheit kontinuierlich ab. Um die Zündtemperatur zu erreichen, kann, falls das Abgas nicht die notwendige Temperatur aufweist, das Abgas oder der Filter erhitzt werden. Alternativ hierzu können dem Kraftstoff katalytisch wirksame Additive beigemengt werden, die sich mit dem Ruß verbinden und die Zündtemperatur senken. Ebenso ist es möglich, den Filter katalytisch zu beschichten oder den Sauerstoff als Oxidationsmittel durch Stickstoffdioxid oder Ozon zu ersetzen. Auch durch diese Maßnahmen ist es möglich, die Zündtemperatur zu senken.

Sämtliche genannten Möglichkeiten zielen auf die Minimierung des Risikos einer Überbeladung des Filters ab, wodurch ein für den Motor kritischer Abgasgegendruck vermieden werden soll. Dennoch kann auch bei Vorsehen der genannten Maßnahmen nicht vollständig ausgeschlossen werden, dass es zu einer Überbeladung des Filters und somit möglicherweise zu einem Absterben des Motors kommt.

Aus der US 5,560,757 ist ein Partikelfilter für einen Dieselmotor bekannt. Im normalen Betriebszustand wird hierbei sämtliches den Filter beaufschlagendes Abgas durch den Partikelfilter gefiltert. Wenn jedoch ein Abgasgegendruck in dem Filter aufgrund von Ablagerungen von Partikel zu groß wird, wird ein Ventil geöffnet, so daß das Abgas wenigstens teilweise ungefiltert den Filter passieren kann. Diese Maßnahme ist zur Vermeidung von Schäden an dem Filter vorgesehen.

Aus der US 4,987,738 ist ebenfalls ein Rußfilter für Verbrennungsmotoren bekannt. Bei Erreichen eines bestimmten Druckes wird hierbei eine Bypass-Leitung geöffnet, so daß Abgas ohne Filterung am Rußfilter vorbeiführbar ist.

Die DE 100 00 921 offenbart ein Rußfilter zur Reinigung von Abgasen eines Dieselmotors. Das Filter weist eine Bypass-Leitung mit einem zerstörbaren Berstblech auf.

Die WO 00/35563 offenbart einen Katalysator mit einem separaten Rohr, das durch einen Körper des Katalysators geführt ist. Das Rohr weist ein Verbindungselement auf, mit dessen Hilfe Überdruck abgebaut werden kann.

Ziel der Erfindung ist es, die Auswirkungen einer Verstopfung eines Rußfilters, welche aufgrund des hieraus resultierenden Abgasgegendrucks zu einem Absterben des Motors führen kann, in möglichst einfacher und kostengünstiger Weise zu neutralisieren.

Dieses Ziel wird erreicht durch einen Rußfilter mit den Merkmalen des unabhängigen Patentanspruchs 1.

### Vorteile der Erfindung

Durch die erfindungsgemäße Bereitstellung einer Sollbruchstelle in dem Filter ist es in besonders einfacher Weise möglich, bei Überschreiten eines bestimmten Abgasgegendrucks einer freien. Abgaskanal zu schaffen, wodurch Beschädigungen des Rußfilters vermieden, und insbesondere ein Absterben des Motors verhindert werden kann. Dabei ist die Sollbruchstelle in dem Filter dadurch realisiert, daß wenigstens ein Filterkanal des Rußfilters einen Verschluß aufweist, der sich bei Erreichen eines bestimmten Abgasgegendruckes öffnet. Insbesondere kann in diesem Zustand wenigsten ein weiterer Filterkanal mit geschlossenem Verschluß verbleiben. Die Bereitstellung von Filterkanälen mit derartigen, unterschiedlich druckempfindlichen bzw. -belastbaren Verschlüssen ist in preiswerter Weise realisierbar. Ein derart ausgebildeter Rußfilter erweist sich in der Praxis als robust und zuverlässig.

Zweckmäßigerweise sind Drucksensoren zur Messung eines stromabwärts und/oder stromaufwärts des Filters herrschenden Druckes, insbesondere zur Messung eines Differenzdruckes über dem Filter (Abgasgegendruck) vorgesehen. Derartige Drucksensoren werden bereits bei herkömmlichen Rußfiltern zur Gewährleistung einer effektiven Steuerung verwendet. Im Rahmen des erfindungsgemäßen Rußfilters ist es beispielsweise möglich, bei Erreichen eines bestimmten Druckes stromabwärts oder stromaufwärts des Filterkörpers, bzw. einer vorbestimmbaren Druckdifferenz, eine mechanische oder elektronische Beaufschlagung der Sollbruchstelle vorzusehen, um diese bei Feststellung der genannten Druck- bzw. Druckdifferenzwerte zum Brechen bzw. Bersten zu bringen. Mit dieser Maßnahme ist es möglich, relativ stabile Verschlüsse einzusetzen, da diese nicht unmittelbar durch Einwirkung eines herrschenden Druckes, sondern durch Zwischenschaltung geeigneter mechanischer oder elektrischer Mittel zum Brechen gebracht werden können.

Dabei kann auch die Aktivierung der Mittel zur Reduzierung des Abgasgegendrucks in dem Rußfilter einem Benutzer, insbesondere einem Fahrer eines Kraftfahrzeuges, zur Verfügung gestellt werden. Durch Überwachung der Aktivierung der Mittel zur Reduzierung des Abgasgegendrucks, d. h. des Zustandes der Sollbruchstellen, ist in einfacher Weise eine Onboard-Diagnose bezüglich der Funktionsfähigkeit des erfindungsgemäßen Rußfilters zur Verfügung gestellt.

### Zeichnung

Die Erfindung wird nun anhand der beigefügten Zeichnung weiter erläutert. In dieser zeigt
- Figur 1: eine schematische, blockschaltbildartige seitliche Ansicht eines Rußfilters,
- Figur 2: eine vereinfachte stirnseitige Ansicht einer Ausführungsform eines erfindungsgemäßen Rußfilters, und
- Figur 3: ein Schaubild zur Darstellung des Abgasgegendrucks als Funktion der Betriebsdauer eines Rußfilters.

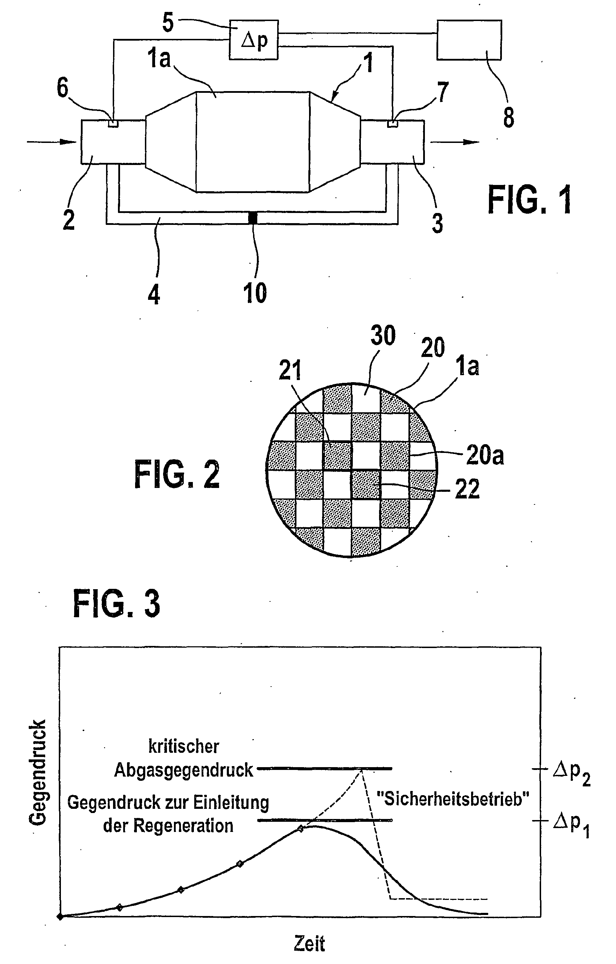

In Figur 1 ist ein Rußfilter dargestellt. Der Filter ist insgesamt mit 1 bezeichnet und weist einen Filterkörper 1a, eine Abgaszuleitung 2 und eine Abgasableitung 3 auf. Abgaszuleitung 2 und Abgasableitung 3 sind ferner mittels eines Bypass-Rohres 4 miteinander verbunden. Im Normalbetrieb des Filters ist ein Durchströmen des Bypass-Rohres 4 mit Abgas durch eine in das Bypass-Rohr 4 eingebrachte Berstplatte 10 verhindert.

Stromabwärts und stromaufwärts des Filterkörpers 1a sind in der Abgaszuleitung 2 bzw. Abgasableitung 3 Drucksensoren 6, 7 vorgesehen, deren Messwerte einer Auswerteeinrichtung 5 zur Feststellung des Abgasgegendrucks in dem Filterkörper 1a zuführbar sind. Die mittels der Einrichtung 5 erhaltenen Informationen sind einer Onboard-Diagnose-Einrichtung 8 zuführbar. Diese Einrichtung ist in der Lage, beispielsweise dem Benutzer eines Kraftfahrzeuges ein entsprechendes Signal bezüglich des Zustandes des Filters 1 zur Verfügung zu stellen.

Das mit der Berstplatte 10 ausgebildete Bypass-Rohr 4 stellt eine Einrichtung zur Notfreischaltung des Filters dar. Die Berstplatte 10 ist hierbei derart mit einer Sollbruchstelle eingerichtet bzw. dimensioniert, dass sie bei Auftreten eines bestimmten Abgasgegendruck-Grenzwertes bricht. In diesem Fall kann das Abgas am Filterkörper 1a vorbei von der Abgaszuleitung 2 in die Abgasableitung 3 strömen, wodurch sichergestellt wird, dass auch bei Verstopfung des Filters ein kritischer Abgasgegendruck und somit ein mögliches Absterben des Motors vermieden werden kann.

Da es bei dem Rußfilter gemäß Figur 1 möglich ist, den Abgasgegendruck auch mittels der Einrichtung 5 zu messen, ist es denkbar, bei feststellen des Abgasgegendruck-Grenzwertes das Bersten der Berstplatte 10 mechanisch einzuleiten. Dabei kann die Berstplatte 10 derart ausgebildet werden, daß sie bei Beaufschlagung mit dem genannten Abgasgegendruck-Grenzwert ohne Notwendigkeit zusätzlicher Maßnahmen bricht.

Es ist ebenfalls möglich, die Berstplatte 10 durch eine beispielsweise magnetisch gehaltene Klappe zu ersetzen, die bei Erreichen des Gegendruck-Grenzwertes von einer geschlossenen in einer offene Position übergeht. Eine derartige Magnetplatte kann beispielsweise derart ausgeführt sein, daß der Zustand "Magnetklappe auf" beispielsweise durch einen hervorstehenden Stift von außen detektierbar ist, so daß auch von außen der Zustand "Magnetklappe geschlossen" beispielsweise vom Werkstattpersonal durch Betätigung des Stiftes wieder eingestellt werden kann.

Eine Ausführungsform des erfindungsgemäßen Rußfilters ist in Figur 2 dargestellt. In dieser Ausführungsform ist die Sollbruchstelle direkt in den Filterkörper 1a eingearbeitet. Man erkennt in Figur 2 zunächst dunkel gezeichnete Kanäle 20, 21 und 22. In diese Kanäle tritt Abgas aus der Abgaszuleitung 2 (siehe Figur 1) ein. Die Seitenwände der Kanäle 20, 21, 22 sind insbesondere semipermeabel ausgebildet, so dass Abgas aus den Kanälen 20, 21, 22 in die benachbarten Kanäle 30 (weiß dargestellt) eintreten kann, wobei Rußpartikel in den Seitenwänden zwischen den Kanälen 20, 21, 22 und 30 zurückgehalten werden. Die Kanäle 30 kommunizieren mit der Abgasableitung 3 (siehe Figur 1). Die Wände zwischen den Kanälen sind in Figur 2 mit 20a bezeichnet.

Die Kanäle 20 sind jeweils mit stirnseitigen keramischen Verschlüssen ausgebildet, welche auch relativ hohen Drücken standhalten können. Die Kanäle 21, 22 sind ebenfalls mit keramischen Verschlüssen ausgebildet. Die Verschlüsse der Kanäle 21, 22 sind in Figur 2 mittels fetter schwarzer Umrandung hervorgehoben. Diese Kanäle 21, 22 zeichnen sich dadurch aus, daß ihre keramischen Verschlüsse bereits bei geringeren Drücken, insbesondere dem bereits erwähnten Abgasgegendruck-Grenzwert, öffenbar bzw. zum Bersten bringbar sind. Dieses ist beispielsweise dadurch realisierbar, daß die keramischen Verschlüsse der Kanäle 21, 22 weniger Druckstabil sind als die Verschlüsse der Kanäle 20, so daß sich bei Erreichen des kritischen Abgasgegendruckes die keramischen Verschlüsse 21, 22 lösen (bzw. brechen) und die Abgaskanäle 21, 22 für ein direktes Durchströmen des Abgases freigegeben werden.

In Figur 3 ist schließlich ein Schaubild zur Darstellung des Abgasgegendrucks als Funktion der Betriebsdauer eines Rußfilters dargestellt. Bei Erreichen eines bestimmten Abgasgegendruckes Δp₁ setzt typischerweise die übliche Regeneration des Rußfilters ein, wodurch der Abgasgegendruck verringert werden kann. Bei einer Fehlfunktion dieser Regeneration kann der Abgasgegendruck über den Wert der Δp₁ weiter ansteigen, so daß der kritische Abgasgegendruck (Abgasgegendruck-Grenzwert) Δp₂ erreicht werden kann. Um eine Überschreitung dieses Wertes zu vermeiden, geht das System in den Sicherheitsbetrieb über, in dem ein zusätzlicher Abgaskanal freigeschaltet wird, wie unter Bezugnahme auf die Figuren 1 und 2 im einzelnen beschrieben wurde.

## Patentansprüche

1. Rußfilter zur Reinigung von Abgasen einer Verbrennungsanlage, insbesondere eines Motors eines Kraftfahrzeuges, mit Mitteln zur Reduzierung eines in dem Rußfilter herrschenden Abgasgegendruckes, wobei die Mittel zur Reduzierung des Abgasgegendruckes wenigstens eine Sollbruchstelle (21, 22) aufweisen, **dadurch gekennzeichnet, dass** die Sollbruchstelle in einem Filterkörper (1a) angeordnet ist, dass der Filterkörper Filterkanäle mit jeweils mindestens einem keramischen Verschluß, insbesondere einem stirnseitig angeordneten keramischen Verschluß, aufweist, wobei die wenigstens eine Sollbruchstelle in dem Filter **dadurch** realisiert ist, dass wenigstens einer der keramischen Verschlüsse druckinstabiler ist als die übrigen Verschlüsse, so dass sich der wenigstens eine Verschluß bei Erreichen eines Abgasgegendruck-Grenzwerts (Δp2) öffnet.

2. Rußfilter nach Anspruch 1, **gekennzeichnet durch** Drucksensoren (6, 7) zur Messung eines stromabwärts und/oder stromaufwärts des Filterkörpers (1a) herrschenden Druckes.

3. Rußfilter nach Anspruch 2, **gekennzeichnet durch** eine Einrichtung (5) zur Messung eines herrschenden Differenzdrucks über dem Filter auf der Grundlage der Meßergebnisse der Sensoren (6, 7) und/oder eine Einrichtung (8) zur Durchführung einer Onboard-Diagnose bezüglich der Funktionsfähigkeit des Filters (1).

## Claims

1. Soot filter for the purification of exhaust gases from a combustion plant, in particular from an engine of a motor vehicle, with means for reducing an exhaust-gas back pressure prevailing in the soot filter, the means for reducing the exhaust-gas back pressure having at least one predetermined breaking point (21, 22), **characterized in that** the predetermined breaking point is arranged in a filter body (la), **in that** the filter body has filter ducts in each case with at least one ceramic closure, in particular a ceramic closure arranged on the end face, the at least one predetermined breaking point being implemented in the filter **in that** at least one of the ceramic closures is more pressure-unstable than the remaining closures, so that the at least one closure opens when an exhaust-gas back pressure limit value (Δp2) is reached.

2. Soot filter according to Claim 1, **characterized by** pressure sensors (6, 7) for measuring a pressure prevailing downstream and/or upstream of the filter body (1a).

3. Soot filter according to Claim 2, **characterized by** a device (5) for measuring a prevailing pressure difference across the filter on the basis of the measurement results of the sensors (6, 7) and/or a device (8) for carrying out an on-board diagnosis with regard to the functioning capacity of the filter (1).

## Revendications

1. Filtre à particules pour nettoyer les gaz d'échappement d'une installation de combustion, notamment d'un moteur de véhicule automobile comportant des moyens pour réduire la contre-pression des gaz d'échappement dans le filtre à particules,
les moyens de réduction de la contre-pression des gaz d'échappement comportant au moins un point de rupture de consigne (21, 22),
**caractérisé en ce que**
le point de rupture de consigne est prévu dans un corps de filtre (la), le corps de filtre comporte des canaux de filtre avec chaque fois au moins une fermeture céramique notamment une fermeture céramique du côté frontal,
le point de rupture de consigne étant réalisé dans le filtre de façon qu'au moins l'une des fermetures céramiques soit moins stable en pression que les autres fermetures pour qu'au moins cette fermeture s'ouvre lorsqu'on atteint la valeur limite de la pression antagoniste des gaz (Δp2).

2. Filtre à particules selon la revendication 1,
**caractérisé par**
des capteurs de pression (6, 7) pour mesurer la pression régnant en aval et/ ou en amont du corps de filtre (1a).

3. Filtre à particules selon la revendication 2,
**caractérisé par**
une installation (5) pour mesurer la pression différentielle régnant de part et d'autre du filtre sur la base des résultats de mesure des capteurs (6, 7) et/ou d'une installation (8) pour effectuer un diagnostic embarqué quant à l'aptitude au fonctionnement du filtre (1).
